# FASCICULE DE BREVET EUROPEEN

(11) **EP 0 733 524 B1**
(45) Date de publication et mention de la délivrance du brevet: **27.02.2002**
(21) Numéro de dépôt: 96400556.5
(22) Date de dépôt: 18.03.1996
(51) Int. Cl.: B60R 25/04

(54) **Antivol électrique, notamment pour un véhicule automobile**
Elektrische Diebstahlsicherung, insbesondere für ein Kraftfahrzeug
Electric anti-theft device, especially for a motor vehicle

(30) Priorité: 21.03.1995 FR 9503395
(43) Date de publication de la demande: 25.09.1996
(73) Titulaire: VALEO SECURITE HABITACLE, 94000 Créteil (FR)
(72) Inventeur: Peyre, Jean, 78800 Houilles (FR)
(74) Mandataire: Kohn, Philippe

(56) Documents cités:
- US-A- 3 735 833
- US-A- 5 202 580
- SCHNEIDER C ET AL: "EIN FAHRZEUGSICHERUNGSSYSTEM OHNE MECHANISCHEN SCHLUESSEL VEHICLE SECURITY SYSTEM DISPENSING WITH MECHANICAL KEY" ATZ AUTOMOBILTECHNISCHE ZEITSCHRIFT,DE,FRANCKH'SCHE VERLAGSHANDLUNG. STUTTGART, vol. 96, no. 5, 1 mai 1994 (1994-05-01), pages 321-323,330, XP000442154 ISSN: 0001-2785

## Description

La présente invention concerne un antivol, notamment pour un véhicule automobile.

Il a déjà été proposé des dispositifs permettant de déverrouiller à distance et donc sans contact ni électrique, ni mécanique, les ouvrants d'un objet et notamment d'un véhicule automobile. En particulier, on a développé des techniques d'accès sans clef qui permettent d'accéder à des ressources sans avoir à sortir une clef mécanique, ou équivalente, d'autorisation de l'accès.

Un tel système est très attractif par le confort qu'il apporte à l'usager et par les possibilités de gestion des accès par des moyens informatiques qu'il permet.

Dans l'application au verrouillage et au déverrouillage d'ouvrants comme ceux d'un véhicule automobile, ou d'un antivol de sécurité comme celui d'une colonne de direction, ou de l'arbre de sortie de la boîte de vitesses d'un véhicule, on a dans cette optique proposé des systèmes mécaniques utilisant des organes moteur de type électrique tels qu'un moteur électrique tournant ou un électro-aimant.

Quand le système de gestion des accès reconnaît le droit d'accès et une demande d'accès, un organe de commande produit un ordre d'actionnement qui excite l'organe moteur électrique. L'antivol et/ou le verrou change d'état en passant de l'état verrouillé à l'état déverrouillé.

Une séquence analogue inverse se produit pour la sortie et/ou l'activation de l'antivol.

Selon une conception connue, décrite et représentée dans le document FR-A-2.710.599 (non publié à la date de priorité du présent brevet), il a déjà été proposé un procédé de contrôle d'un antivol de véhicule automobile, notamment avec système d'accès par commande à distance, faisant notamment appel à un commutateur de commande de démarrage et d'alimentation électrique des accessoires du véhicule. Un autre état de la technique est constitué par le document US-A-3.735.833.

Selon le procédé, dans une phase de désactivation de l'antivol, on accède au véhicule, par exemple avec une télécommande, on manoeuvre un commutateur qui reproduit la manipulation des clefs mécaniques habituelles, on détecte une position déterminée du commutateur pour produire une interrogation d'identification de la demande de déverrouillage de l'antivol, on produit en réponse un ordre d'activation de positions successives du commutateur et un ordre de déverrouillage de l'antivol.

Dans une phase d'activation de l'antivol, on détecte une manoeuvre d'activation de l'antivol sur le commutateur, cette manoeuvre reproduisant les manipulations habituelles des clefs mécaniques, on active l'antivol, on désactive les positions successives du commutateur.

Pour la mise en oeuvre d'un tel procédé, il est fait appel à un antivol du type comportant :
- un commutateur d'antivol pour la commande du démarrage du moteur du véhicule et de l'alimentation de différents circuits électriques du véhicule ;
- un antivol motorisé comportant un moteur électrique d'entraînement d'un organe de blocage entre une position verrouillée et une position déverrouillée ; et
- une centrale d'antivol connectée aux éléments précédents pour mettre en oeuvre un procédé de contrôle de l'antivol ;
et du type dans lequel le commutateur d'antivol comporte:
- un interrupteur de clef pour détecter la simulation de l'introduction d'une clef dans le commutateur d'antivol ; et
- un interrupteur de commande à positions multiples pour commander en séquence l'alimentation de plusieurs circuits électriques du véhicule et du démarreur, comportant un contact mobile de commande relié à une polarité d'une source d'alimentation électrique, et une série de contacts fixes avec lesquels le contact mobile entre successivement en contact lors de la manoeuvre du commutateur en vue de provoquer le démarrage du véhicule, et parmi lesquels le dernier contact fixe est relié notamment au démarreur, l'interrupteur de commande ne pouvant être actionné qu'en présence d'une clef.

La présente invention a pour but de proposer un antivol du type mentionné précédemment qui notamment, empêche tout démarrage du véhicule tant que l'organe de blocage de l'antivol n'est pas dans la position déverrouillée et évite toute possibilité d'activation de l'antivol vers sa position verrouillée tant que le véhicule n'est pas arrêté.

Dans ce but, l'invention propose un antivol caractérisé en ce que :
- le contact fixe de démarreur est relié au démarreur par un dispositif d'inhibition qui n'établit l'alimentation du démarreur que lorsque l'antivol est en position déverrouillée ; et en ce que :
- le moteur d'entraînement de l'antivol motorisé est relié à la source d'alimentation par l'interrupteur de clef, en l'absence de clef, et, lorsqu'une clef est introduite, par une ligne d'alimentation reliée à un contact fixe de déverrouillage appartenant à l'interrupteur de commande et avec lequel le contact mobile de commande ne coopère que simultanément avec le contact fixe de démarreur.

Selon d'autres caractéristiques de l'invention :
- l'antivol comporte des moyens de détection de l'état verrouillé ou déverrouillé de l'antivol qui délivrent un signal correspondant à la centrale d'antivol ;
- les moyens de détection comportent un interrupteur de détection à deux positions, verrouillée ou déverrouillée, dont le contact mobile est entraîné par le moteur d'entraînement, ou l'organe de blocage, et dont les contacts fixes sont reliés à la centrale d'antivol ;
- le dispositif d'inhibition est un interrupteur d'inhibition dont le contact mobile est relié au contact fixe de démarreur et coopère avec un contact fixe relié au démarreur lorsque le contact mobile de l'interrupteur de détection est dans sa position déverrouillée ;
- les contacts mobiles des interrupteurs de détection et d'inhibition sont solidaires l'un de l'autre ;
- les moyens de détection de l'état verrouillé ou déverrouillé de l'antivol comportent deux capteurs de position du moteur d'entraînement, ou de l'organe de blocage, qui sont reliés à la centrale d'antivol ;
- selon une variante de réalisation, le dispositif d'inhibition est un transistor dont l'émetteur est relié à la source d'alimentation, dont le collecteur est relié au démarreur, et dont la base est reliée à la centrale d'antivol, le contact fixe de démarreur étant relié à la centrale d'antivol, et le transistor n'étant passant que lorsque la centrale d'antivol reçoit simultanément un signal de déverrouillage de l'antivol provenant du capteur correspondant des moyens de détection et un signal de commande du démarrage provenant du contact fixe de démarreur ;
- le commutateur d'antivol est un commutateur rotatif ;
- l'interrupteur de clef comporte un contact mobile relié à la source d'alimentation et qui est susceptible de coopérer avec un premier contact fixe relié au moteur d'entraînement de l'antivol motorisé, en l'absence de clef, et un second contact fixe relié à la centrale de contrôle, en présence d'une clef introduite, pour transmettre à la centrale d'antivol un signal de demande de déverrouillage ou de verrouillage de l'antivol ;
- le moteur d'entraînement est relié électriquement à l'interrupteur de clef et au contact fixe de déverrouillage par un bloc d'alimentation qui reçoit des signaux de commande de verrouillage ou de déverrouillage provenant de la centrale d'antivol.

D'autres caractéristiques et avantages de l'invention apparaîtront à la lecture de la description détaillée qui va suivre pour la compréhension de laquelle on se reportera aux dessins annexés dans lesquels :
- La figure 1 est un schéma illustrant un principe de réalisation d'un antivol selon l'état de la technique ;
- la figure 2 est un schéma qui illustre un mode de réalisation d'un antivol selon l'invention sur lequel l'antivol électrique est représenté à l'état verrouillé ;
- la figure 3 est un schéma similaire à celui de la figure 2 sur lequel l'antivol électrique passe de l'état verrouillé à l'état déverrouillé ;
- la figure 4 est un schéma similaire à celui de la figure 3 sur lequel l'antivol électrique est représenté à l'état déverrouillé ;
- la figure 5 est un schéma similaire à celui de la figure 2 sur lequel l'antivol passe de l'état déverrouillé à l'état verrouillé ;
- les figures 6 à 9 sont des schémas similaires à ceux des figures 2 à 5 qui illustrent un second mode de réalisation d'un antivol électrique conforme aux enseignements de l'invention.

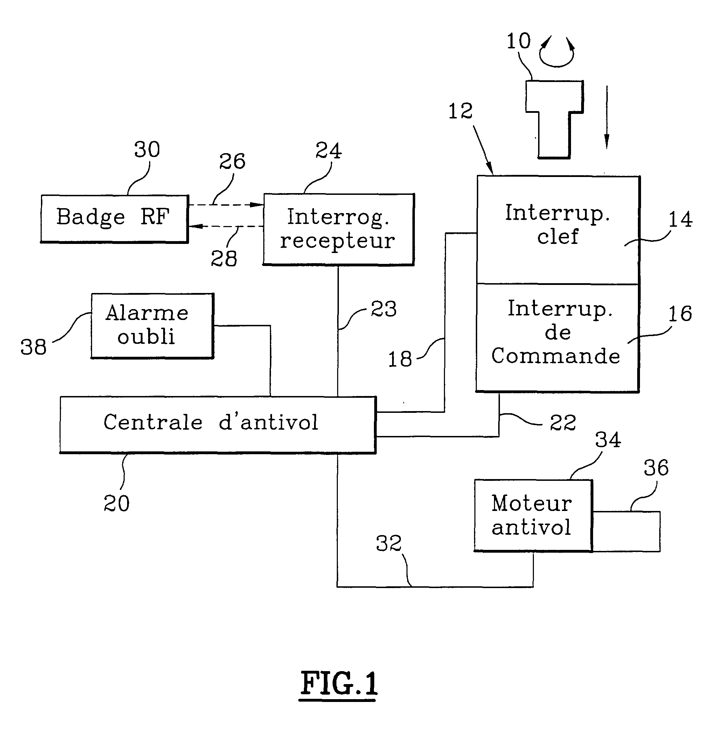

L'antivol 10 schématisé à la figure 1 comporte une clef, ou fausse, clef 10 qui est destinée à venir s'introduire dans le canon, ou faux canon, d'un commutateur d'antivol 12.

Le commutateur est prévu pour équiper le tableau de bord du véhicule et sa conception est de type sensiblement proche de celle du commutateur de démarrage d'un véhicule selon l'état de la technique.

L'utilisateur manoeuvre la clef de contact 10 ou un anneau d'allumage.

La clef de contact 10 est en fait une fausse clef en ce qu'elle n'agit pas nécessairement sur une serrure mécanique, bien qu'une telle clef réelle apporte un degré supplémentaire de sécurité en ajoutant un moyen de verrouillage ou de déverrouillage supplémentaire en chaîne avec la conception générale d'un antivol électrique.

Le commutateur d'antivol 12 comporte un interrupteur de clef 14 qui est destiné à détecter l'absence de la clef 10 ou la présence en position introduite de cette dernière.

Le commutateur 12 comporte également un interrupteur de commande à positions multiples 16 pour la commande du démarrage du moteur du véhicule et pour la commande de l'alimentation de différents circuits électriques du véhicule.

L'interrupteur de clef 14 est relié par une ligne 18 à une entrée d'une centrale d'antivol 20 tandis que l'interrupteur de commande 16 est relié par une ligne 22 à une autre entrée de la centrale d'antivol 20.

La centrale d'antivol comporte un circuit d'analyse qui est notamment capable de lire les positions qu'occupent les interrupteurs 14 et 16 du commutateur 12.

La centrale d'antivol comporte par exemple un microcontrôleur tel qu'un circuit INTEL 8051. Ce circuit contient un programme de lecture des ports d'entrée pour informer la centrale d'antivol des positions des différents interrupteurs du commutateur 12 comme cela sera expliqué par la suite.

Selon une conception connue, et par une autre entrée et une ligne 23, la centrale d'antivol 20 échange des signaux avec une station d'interrogation et de réception 24 qui échange par des lignes 26 et 28 des signaux avec un badge 30 d'accès sans clef au véhicule.

En fonction des échanges avec la centrale d'antivol 20, celle-ci produit sur une liaison 32 un signal de commande de la mise en marche, dans l'un ou l'autre sens, d'un moteur d'antivol 34 qui agit sur un organe 36 de blocage mécanique de la colonne de direction du véhicule, ou de l'arbre de sortie de la boîte de vitesses.

Par ailleurs, si l'utilisateur oublie le badge radiofréquence 30 à l'intérieur du véhicule ou s'il omet de manoeuvrer la clef 10 pour mettre en oeuvre une séquence d'activation de l'antivol alors qu'il laisse son badge 30 dans le véhicule, la centrale d'antivol 20 produit l'activation d'un moyen d'alarme d'oubli 38.

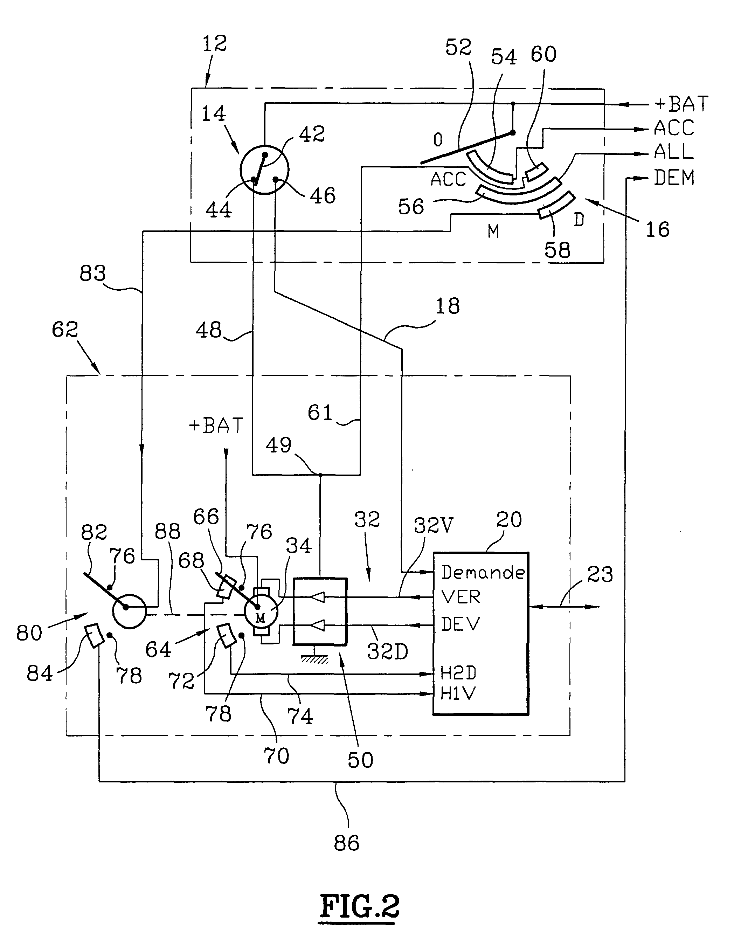

On décrira maintenant un premier mode de réalisation d'un antivol électrique selon l'invention en se reportant au schéma de la figure 2 sur laquelle des composants identiques ou similaires à ceux de la figure 1 sont désignés par les mêmes chiffres de référence.

L'interrupteur de clef 14 comporte un contact mobile basculant 42 qui est relié en permanence à la borne +BAT de la batterie du véhicule et dont l'extrémité libre coopère avec un contact fixe 44 en l'absence de clef, ou avec un contact fixe 46 lorsqu'une clef 10 est introduite dans le commutateur de commande 12.

Le contact fixe 44 est relié par une ligne 48 à l'entrée d'alimentation 49 d'un bloc 50 d'alimentation électrique du moteur 34 qui reçoit des signaux de commande de verrouillage et de déverrouillage par des lignes 32V et 32D reliés à des ports de sortie VER, DEV de la centrale d'antivol 20.

Le contact fixe 46 de l'interrupteur de clef 14 est relié par la ligne 18 à un port d'entrée "Demande" de la centrale d'antivol 20 de manière que cette dernière puisse déclencher une séquence d'identification de la demande de déverrouillage de l'antivol ou de la demande de verrouillage de l'antivol.

L'interrupteur de commande à positions multiples 16 est un interrupteur du type rotatif qui comporte un contact mobile de commande 52 qui est relié en permanence à la borne +BAT de la batterie du véhicule.

Le contact mobile de commande 52 est susceptible d'occuper successivement plusieurs positions décalées angulairement les unes par rapport aux autres et qui sont repérées "0", "ACC", "M", et "D" sur les figures.

Dans ces positions successives d'arrêt, d'alimentation d'accessoires électriques, de marche, et de démarrage, le contact mobile rotatif de commande 52 est susceptible de coopérer avec une ou plusieurs pistes conductrices agencées en arc de cercle constituant les contacts fixes de l'interrupteur 16.

Lorsque le contact mobile 52 est dans la position ACC, il coopère avec une piste fixe 54 qui est reliée électriquement au circuit d'alimentation ACC des accessoires du véhicule.

Lorsque l'organe mobile de commande 52 est dans la position M, il est simultanément en contact avec la piste 54 et avec une piste conductrice 56 qui est reliée au circuit d'allumage ALL du moteur du véhicule.

Lorsque le contact mobile 52 est dans la position D, il est simultanément en contact avec la piste 56 ainsi qu'avec deux pistes conductrices 58 et 60.

La piste 58 est le contact fixe de démarreur DEM du moteur à combustion du véhicule (non représenté) qui est relié au démarreur d'une manière qui sera décrite plus en détail par la suite.

La piste conductrice 60 constitue le contact fixe de déverrouillage au sens de l'invention et l'agencement de la piste 60 par rapport à la piste 58 est tel que le contact mobile 52 est simultanément en contact avec les deux pistes 58 et 60, ces dernières s'étendant sur un même secteur angulaire.

Le contact de déverrouillage 60 est relié en permanence à l'entrée d'alimentation électrique 49 du bloc d'alimentation 50 du moteur 34, par une ligne 61.

On décrira maintenant plus en détail le module de blocage 62 entouré par une ligne en trait mixte à la partie inférieure de la figure 2.

Le module de blocage 62 comporte des moyens 64 de détection de l'état verrouillé ou déverrouillé de l'antivol qui délivrent un signal correspondant à la centrale d'antivol 20.

Dans le premier mode de réalisation illustré aux figures 2 à 5, les moyens de détection 64 sont constitués par un interrupteur de détection à deux positions.

L'interrupteur de détection comporte un contact mobile de détection 66 qui est ici lié en rotation au moteur 34 d'entraînement de l'organe de blocage de l'antivol et qui est susceptible de coopérer avec un premier contact fixe en forme de piste 68 qui est relié par une ligne 70 à un port d'entrée H1V de la centrale d'antivol 20, lorsque l'antivol est en position verrouillée.

Le contact mobile de détection 66 est également susceptible de coopérer avec un second contact fixe en forme de piste 72 qui est relié, par une ligne 74 à un port d'entrée H2D de la centrale d'antivol 20 lorsque l'antivol est en position déverrouillée.

On a également représenté une butée mécanique de verrouillage 76 et une butée mécanique de déverrouillage 78 qui limitent la course de verrouillage et de déverrouillage du moteur 34 et contre lesquelles le moteur vient en butée après que l'interrupteur 64 ait atteint l'une ou l'autre des pistes 68 ou 72.

Conformément à l'invention, il est également prévu des moyens 80 d'inhibition de l'alimentation en énergie électrique du démarreur DEM.

Dans le mode de réalisation illustré aux figures 2 à 5, les moyens d'inhibition 80 sont constitués par un interrupteur d'inhibition.

Le contact mobile de détection 66 est en permanence relié à la borne +BAT de la batterie du véhicule.

L'interrupteur d'inhibition 80 comporte un contact mobile d'inhibition 82 qui est en permanence relié au contact fixe de démarreur 58 de l'interrupteur à contacts multiples 16 du commutateur 12 par une ligne 83.

Le contact mobile d'inhibition 82 est susceptible de se déplacer entre une position neutre de repos illustrée sur la figure 2 et une position active dans laquelle il est en contact avec un contact fixe 84 en forme de piste qui est relié par une ligne 86 au démarreur DEM.

Le contact mobile d'inhibition 82 est lié en mouvement au contact mobile de détection 66 par une liaison mécanique 88 schématisée à la figure 1.

Ainsi, quand le contact mobile de détection 66 est dans sa position verrouillée en contact avec le contact fixe 68, le contact mobile d'inhibition 82 est dans sa position neutre, tandis qu'il est dans sa position active en contact avec la piste 84 lorsque le contact mobile de détection 66 est en contact avec le contact fixe 72, c'est-à-dire lorsque l'antivol est déverrouillé.

On décrira maintenant le fonctionnement de l'antivol électrique illustré aux figures 2 à 5.

Dans la position verrouillée illustrée sur la figure 2, le moteur 34 est en contact avec la butée mécanique de verrouillage 76, le contact mobile 42 de l'interrupteur 14 est en contact avec le contact fixe 44 et l'organe mobile de commande 52 est dans sa position d'arrêt "0".

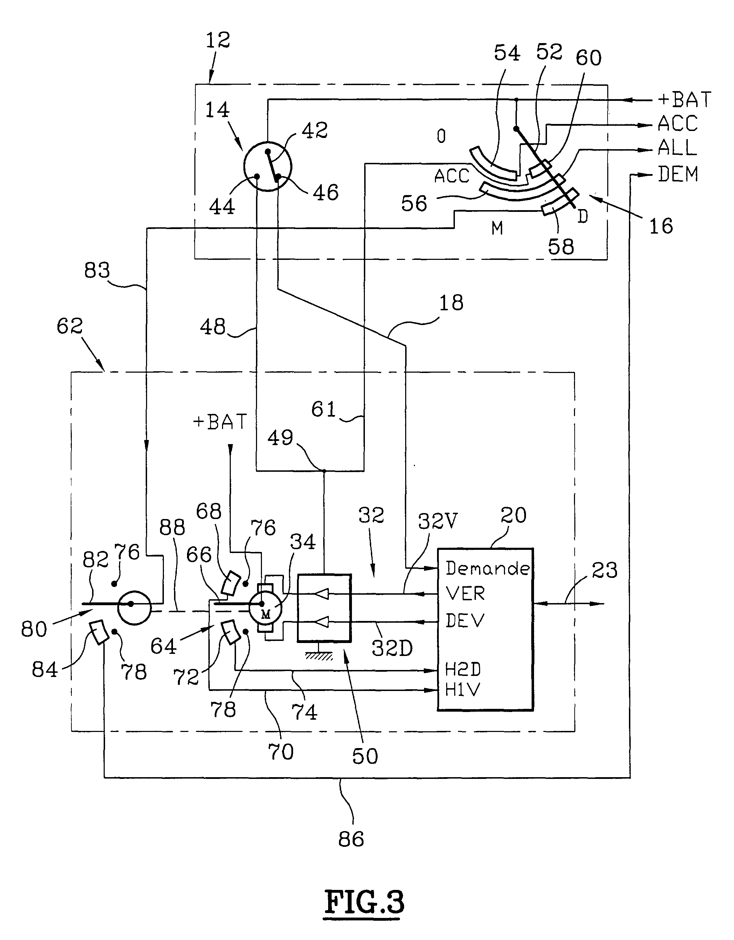

Lorsque le conducteur introduit la clef 10 dans le commutateur 12, il provoque d'abord le changement d'état de l'interrupteur de clef 14 qui passe de la position illustrée sur la figure 2 à la position illustrée sur la figure 3.

Dans cette nouvelle position, l'organe mobile de contact 42 est en contact avec le contact fixe 46 et il transmet par la ligne 18 un ordre de demande de déverrouillage au port d'entrée "Demande" de la centrale d'antivol 20.

Le changement d'état de l'interrupteur de clef 14 a également pour effet d'interrompre l'alimentation électrique directe par la ligne 48 du bloc d'alimentation 50 du moteur 34.

Le conducteur fait ensuite pivoter l'interrupteur à contact multiple 16 dont l'élément mobile de commande 52 peut pivoter jusqu'à sa position angulaire maximale dans laquelle il est simultanément en contact avec les contacts fixes 56, 58 et 60.

La venue en contact de l'élément mobile avec le contact fixe de déverrouillage 60 provoque l'alimentation en énergie électrique du bloc de commande 50 du moteur 34.

La centrale d'antivol 20 qui a reçu préalablement un ordre à son port d'entrée "Demande" transmet par la ligne 32V un ordre au bloc d'alimentation 50 qui provoque l'alimentation du moteur d'entraînement 34 dans le sens du déverrouillage de l'antivol.

Dans la position intermédiaire illustrée sur la figure 3, le moteur 34 est illustré à mi-course entre la position de verrouillage déterminée par la butée mécanique 76 et la position de déverrouillage déterminée par la butée mécanique de déverrouillage 78.

Dans cette position, l'organe mobile de détection 66 a quitté le contact fixe 68 et la centrale d'antivol 20 a donc reçu un message correspondant par la ligne 70.

Le contact mobile 66 de détection n'a pas encore atteint le contact fixe 72 de détection du déverrouillage et le contact mobile d'inhibition 82 n'a pas encore atteint le contact fixe 84.

L'antivol est donc en cours de déverrouillage et le démarreur n'est toujours pas alimenté en énergie électrique dans la mesure où le contact mobile d'inhibition 82 n'a pas encore relié électriquement la ligne 83 à la ligne 86.

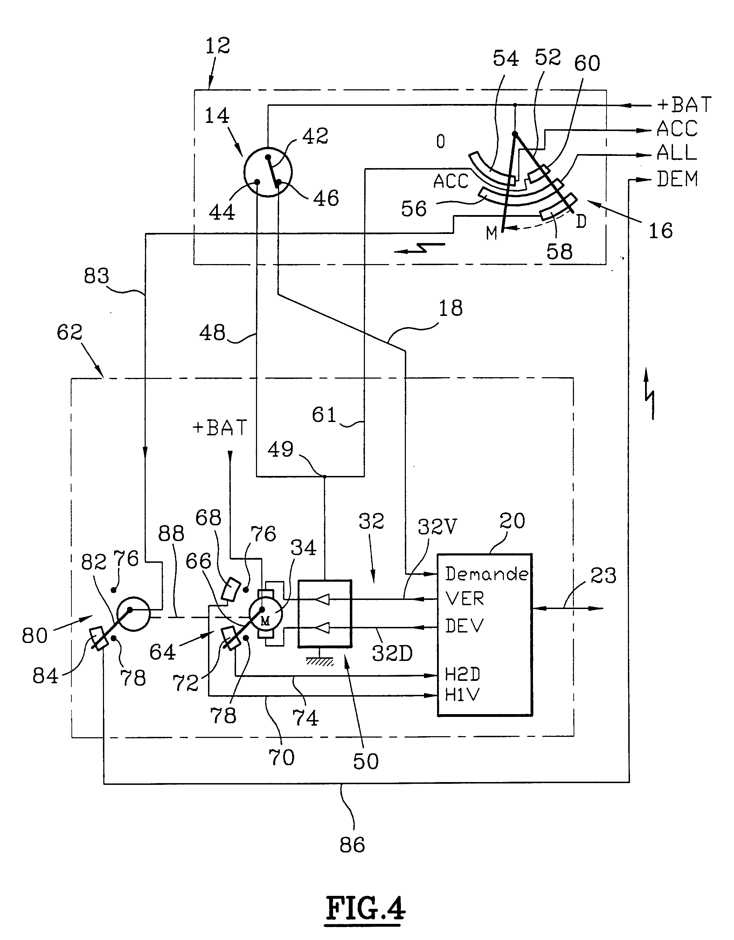

La rotation du moteur 34 se poursuit jusqu'à la position déverrouillée illustrée sur la figure 4.

Dans cette position, la rotation du moteur 34 est terminée et il est en butée contre la butée mécanique de déverrouillage 78.

L'organe mobile de détection 66 qui est en contact avec le contact fixe 72 a également transmis un signal correspondant au port d'entrée H2V de la centrale d'antivol 20.

Simultanément, le contact mobile d'inhibition 82 est arrivé en contact avec le contact fixe 84 et le démarreur DEM est ainsi relié électriquement à la borne +BAT par le contact mobile de commande 52, le contact fixe dé démarreur 58, la ligne 83, le contact mobile d'inhibition 82 et la ligne 86.

L'antivol est donc en position déverrouillée et le démarreur du moteur à combustion du véhicule est alimenté électriquement pour permettre au conducteur de procéder au démarrage du véhicule.

Le conducteur peut ensuite ramener le contact mobile de commande 52 de la position de démarrage D à la position de marche M illustrée sur la figure 4 dans laquelle le contact mobile 52 est simultanément en contact avec le contact fixe 54 alimentant les accessoires ACC et avec le contact fixe 56 alimentant le circuit d'allumage ALL.

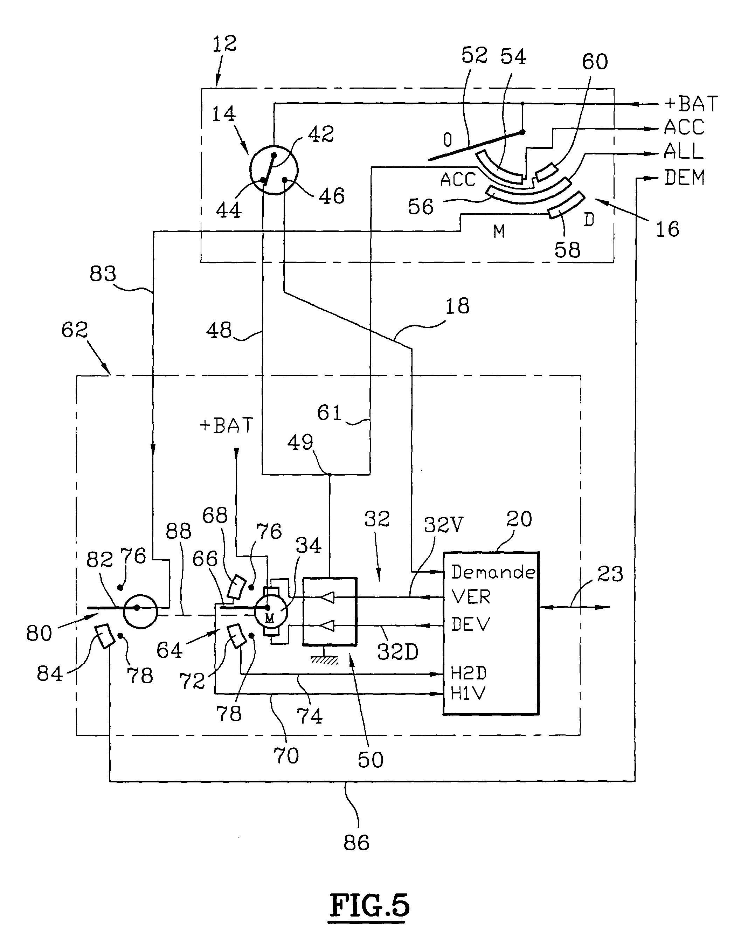

Lorsque le conducteur arrête le véhicule et désire procéder au verrouillage de l'antivol, il ramène d'abord, comme cela est illustré sur la figure 5, le contact mobile 52 de l'interrupteur à positions multiples 16 dans la position d'arrêt "0" dans laquelle il n'est plus en contact avec aucune des pistes fixes de contact 54 à 60.

A la fin de cette rotation, le conducteur retire la fausse clef 10, ce qui a pour effet de ramener le contact de clef 14 dans sa position illustrée aux figures 2 et 5 dans laquelle le contact mobile 42 relie directement la borne +BAT à l'entrée d'alimentation électrique 49 du bloc d'alimentation 50 du moteur 34 par la ligne 48.

Le retour du contact de clef 14 de sa position active illustrée à la figure 4 à sa position de repos illustrée à la figure 5 a également eu pour effet de modifier le signal au port d'entrée "Demande" de la centrale d'antivol 20 qui détecte ainsi un ordre de demande analysé comme un ordre de déverrouillage.

La centrale d'antivol 20 transmet alors par la ligne 32D un ordre de déverrouillage au bloc d'alimentation 50 et au moteur 34, ce dernier quittant la position de déverrouillage contre la butée mécanique de déverrouillage 78 pour aller jusqu'à la position de verrouillage déterminée par la butée mécanique de verrouillage 76, les différents composants retrouvant alors leur position respective illustrée à la figure 2.

Conformément à l'invention, on comprend aisément que tant que le conducteur n'a pas retiré la fausse clef, c'est-à-dire tant qu'il n'a pas provoqué le changement d'état de l'interrupteur de clef 14, à partir de la position que celui-ci occupe sur la figure 4, qu'il est impossible que le bloc d'alimentation 50, sous l'ordre de la centrale d'antivol 20, provoque le verrouillage de l'antivol dans la mesure où le bloc 50 n'est pas alimenté électriquement. En effet, en partant de la position illustrée sur la figure 4, même une action intempestive sur l'interrupteur rotatif à positions multiples 16 tendant à déplacer son contact mobile de commande 52 de la position marche M à la position de démarrage D n'aurait pas d'effet sur le moteur 34 dans la mesure où la centrale d'antivol 20 ne recevrait pas d'ordre de demande de verrouillage à son port d'entrée "Demande".

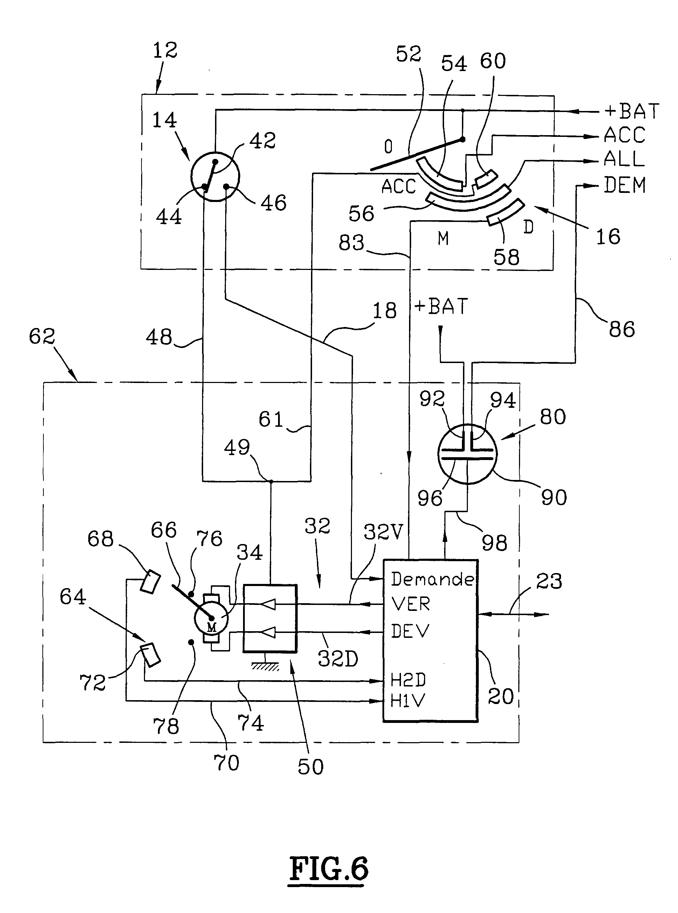

On décrira maintenant le second mode de réalisation illustré aux figures 6 à 9 sur lesquelles des composants identiques ou similaires à ceux des figures 1 à 5 sont désignés par les mêmes chiffres de référence.

Dans ce mode de réalisation, les moyens de détection 64 sont constitués par deux capteurs à effet HALL 68, 72 qui sont reliés aux ports d'entrée H1V et H2D de la centrale d'antivol 20 par les lignes 70 et 74.

Le contact mobile 66 est ici remplacé par un élément mobile 66 qui agit sur l'un ou l'autre des deux capteurs 68 ou 72 en fonction de la position qu'il occupe par rapport à ces capteurs.

Les moyens d'inhibition 80 sont ici constitués par un circuit électronique représenté de manière schématique sous la forme d'un transistor 90 dont le collecteur 92 est relié à la borne +BAT de la batterie, dont l'émetteur 94 est relié au démarreur DEM par une ligne 86 et dont la base 96 est reliée par une ligne 98 à un port de sortie de la centrale d'antivol 20.

Enfin, le contact fixe de démarreur 58 est relié directement par la ligne 83 à un port d'entrée de la centrale d'antivol 20.

On décrira maintenant le mode de fonctionnement du second mode de réalisation de l'antivol électrique illustré aux figures 6 à 9.

Dans la position verrouillée illustrée sur la figure 6, l'antivol est en position verrouillée, avec l'interrupteur de clef 14 et l'interrupteur 16 dans leurs positions respectives de repos.

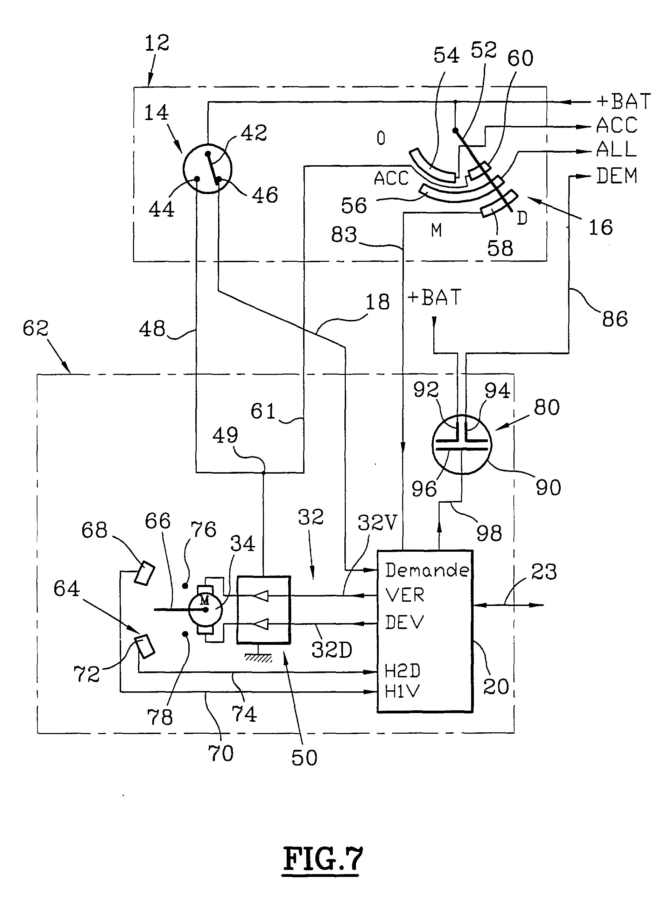

Lorsque le conducteur introduit une clef 10 dans le commutateur 12 et provoque la rotation du contact mobile de commande 52 jusqu'à la position de démarrage D illustrée sur la figure 7, il transmet une demande de déverrouillage à la centrale d'antivol 20 qui provoque la mise en marche du moteur 34 jusqu'à la position intermédiaire illustrée à la figure 7.

Dans cette position, la centrale d'antivol 20 reçoit un signal par la ligne 83 provenant du contact fixe de démarrage 58, mais le transistor 90 est à l'état bloqué car sa base 96 n'est pas alimentée par la centrale d'antivol 20.

Lorsque le moteur 34 termine sa course de déverrouillage en contact avec la butée mécanique de déverrouillage 78, la centrale d'antivol 20 reçoit du capteur 72, par la ligne 74 un signal d'indication du déverrouillage à son port d'entrée H2D.

Après avoir analysé ce signal de déverrouillage, la centrale d'antivol 20 alimente, par la ligne 98, la base 96 du transistor 90 et provoque ainsi l'alimentation du démarreur DEM depuis la borne d'entrée +BAT de la batterie à travers le collecteur 92 et l'émetteur 94.

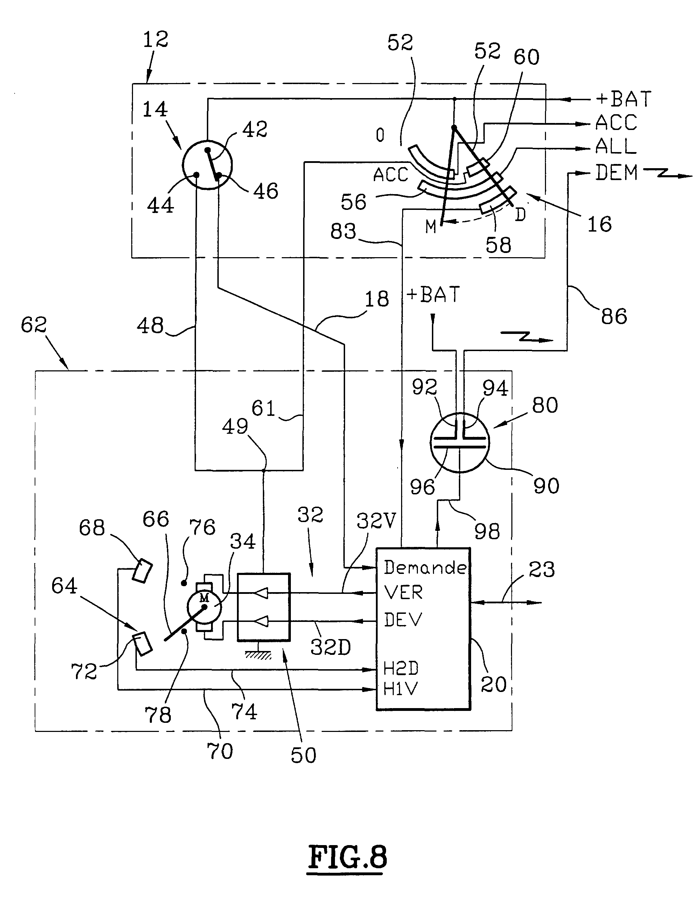

Une fois que le moteur a démarré, le conducteur ramène, comme cela est schématisé sur la figure 8, le contact mobile 52 vers sa position de marche M.

Le retour à cette position de marche, provoque un changement d'état correspondant du port d'entrée de la centrale d'antivol 20 relié au contact fixe de démarrage 58 par la ligne 83.

La centrale d'antivol 20 sait donc alors que l'antivol est en position déverrouillée et que le véhicule est en marche.

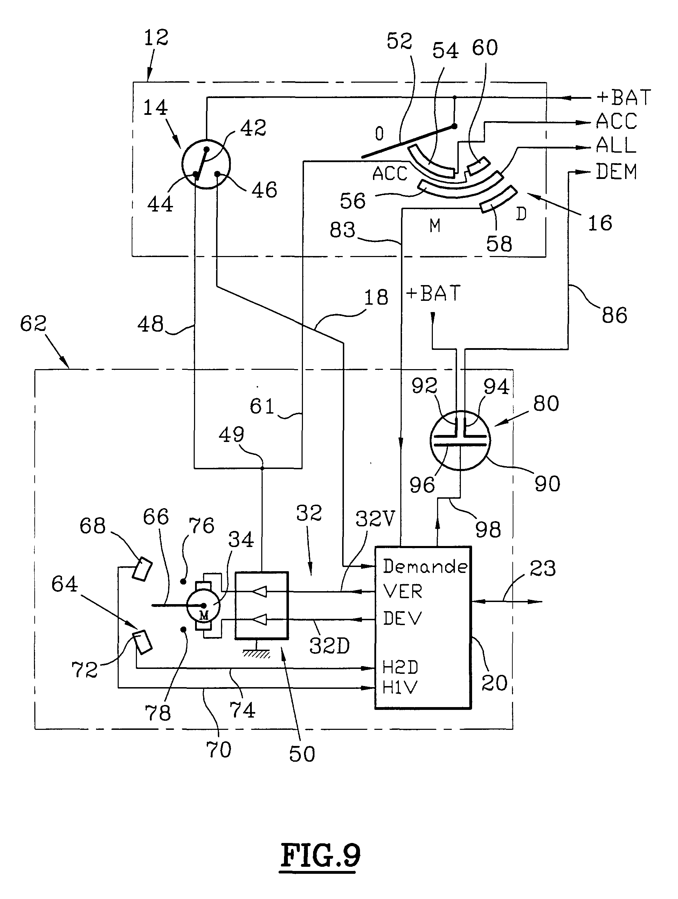

Lorsque le conducteur arrête le véhicule, et comme cela est illustré sur la figure 9, il ramène l'interrupteur à positions multiples 16 et l'interrupteur de clef 14 dans leurs positions de repos illustrées sur la figure 9.

Cette opération provoque un signal de demande de verrouillage qui est transmis par la ligne 18 au port d'entrée "Demande" de la centrale d'antivol 20 qui commande, par la ligne 32V, le bloc de déverrouillage 50 pour provoquer la rotation du moteur 34 vers la position de verrouillage de l'antivol.

Le moteur 34 est illustré sur la figure 9 dans une position intermédiaire à mi-course entre le déverrouillage et le verrouillage.

Ce changement d'état du port d'entrée provoque l'interruption de la commande du transistor 90 et rend donc désormais impossible la mise en marche du démarreur.

La rotation du moteur 34 se poursuit jusqu'à ce qu'il revienne dans sa position de verrouillage illustrée à la figure 5 qui est détectée par le capteur 68 de position de verrouillage qui transmet un ordre correspondant au port d'entrée H1V de la centrale d'antivol 20.

Comme dans le cas du premier mode de réalisation, on comprend aisément qu'il est impossible de faire fonctionner le démarreur tant que l'antivol n'est pas en position déverrouillée, et qu'il est également impossible de provoquer un verrouillage intempestif de l'antivol tant que le véhicule n'est pas arrêté, ou tout au moins son moteur, du fait de la logique de commande du transistor 90 par la centrale d'antivol 20 en réponse aux signaux transmis à cette dernière par les lignes 18, 70, 72 et 83.

L'invention n'est pas limitée aux modes de réalisation qui viennent d'être décrits.

L'invention n'est notamment pas limitée à la réalisation d'un interrupteur de clef 14 sous la forme d'un interrupteur électrique commandé par une fausse clef, cette fonction pouvant être remplacée par tout autre type d'interrupteur électrique commandé directement ou indirectement par le conducteur.

De même, l'interrupteur 16 à positions multiples n'est pas nécessairement un interrupteur rotatif.

L'invention a été décrite dans le cadre de l'inhibition de l'alimentation électrique du démarreur. Sans sortir du cadre de l'invention, il est bien entendu possible de remplacer le dernier contact associé au démarreur par un contact fixe associé par exemple au circuit d'allumage du moteur.

## Revendications

1. Antivol électrique, notamment pour un véhicule automobile, du type comportant :
- un commutateur d'antivol (12) pour la commande du démarrage (DEM) du moteur du véhicule et de l'alimentation de différents circuits électriques du véhicule (ACC, ALL) ;
- un antivol motorisé comportant un moteur électrique (34) d'entraînement d'un organe de blocage (36) entre une position verrouillée et une position déverrouillée ; et
- une centrale d'antivol (20) connectée aux éléments précédents pour mettre en oeuvre un procédé de contrôle de l'antivol ;
et du type dans lequel le commutateur d'antivol (12) comporte :
- un interrupteur de clef (14) pour détecter la simulation de l'introduction d'une clef (10) dans le commutateur d'antivol (12) ; et
- un interrupteur de commande (16) à positions multiples pour commander en séquence l'alimentation de plusieurs circuits électriques du véhicule (ACC, ALL) et du démarreur (DEM), comportant un contact mobile de commande (52) relié à une polarité (+BAT) d'une source d'alimentation électrique, et une série de contacts fixes (54, 56, 58) avec lesquels le contact mobile (52) entre successivement en contact lors de la manoeuvre du commutateur (12) en vue de provoquer le démarrage du véhicule, et parmi lesquels le dernier contact fixe (58) est relié notamment au démarreur (DEM), l'interrupteur de commande ne pouvant être actionné qu'en présence d'une clef ;
**caractérisé en ce que** :
- le contact fixe de démarreur est relié au démarreur par un dispositif (80) d'inhibition qui n'établit l'alimentation du démarreur (DEM) que lorsque l'antivol est en position déverrouillée ;
et **en ce que**:
- le moteur (34) d'entraînement de l'antivol motorisé est relié à la source d'alimentation (+BAT) par l'interrupteur de clef (14), en l'absence de clef (10), et, lorsqu'une clef (10) est introduite, par une ligne d'alimentation (61) reliée à un contact fixe de déverrouillage (60) appartenant à l'interrupteur de commande (16) et avec lequel (60) le contact mobile de commande (52) ne coopère que simultanément avec le contact fixe de démarreur (58).

2. Antivol selon la revendication 1, **caractérisé en ce qu'**il comporte des moyens (64) de détection de l'état verrouillé ou déverrouillé de l'antivol qui délivrent un signal correspondant à la centrale d'antivol (20).

3. Antivol selon la revendication 2, **caractérisé en ce que** les moyens de détection (64) comportent un interrupteur de détection à deux positions, verrouillée ou déverrouillée, dont le contact mobile (66) est entraîné par le moteur d'entraînement (34), ou l'organe de blocage, et dont les contacts fixes (68, 70) sont reliés à la centrale d'antivol (20).

4. Antivol selon la revendication 3, **caractérisé en ce que** le dispositif d'inhibition (80) est un interrupteur d'inhibition dont le contact mobile (82) est relié (83) au contact fixe de démarreur (58) et coopère avec un contact fixe (84) relié au démarreur (DEM) lorsque le contact mobile (66) de l'interrupteur de détection (64) est dans sa position déverrouillée.

5. Antivol selon la revendication 4, **caractérisé en ce que** les contacts mobiles (66, 82) des interrupteurs de détection (64) et d'inhibition (80) sont solidaires l'un de l'autre.

6. Antivol selon la revendication 2, **caractérisé en ce que** les moyens de détection (64) de l'état verrouillé ou déverrouillé de l'antivol comportent deux capteurs (68, 72) de position du moteur d'entraînement (34), ou de l'organe de blocage, qui sont reliés à la centrale d'antivol (20).

7. Antivol selon la revendication 6, **caractérisé en ce que** le dispositif d'inhibition (80) est un transistor (90) dont le collecteur (92) est relié à la source d'alimentation (+BAT), dont l'émetteur (94) est relié au démarreur (DEM), et dont la base (96) est reliée à la centrale d'antivol (20), **en ce que** le contact fixe de démarreur (58) est relié à la centrale d'antivol (20), et **en ce que** le transistor (90) n'est passant que lorsque la centrale d'antivol reçoit simultanément un signal de déverrouillage de l'antivol provenant du capteur correspondant (72) des moyens de détection (64) et un signal de commande du démarrage provenant du contact fixe (58) de démarreur.

8. Antivol selon l'une quelconque des revendications précédentes, **caractérisé en ce que** le commutateur d'antivol (12) est un commutateur rotatif.

9. Antivol selon l'une quelconque des revendications précédentes, **caractérisé en ce que** l'interrupteur de clef (14) comporte un contact mobile (42) relié à la source d'alimentation (plus BAT) et qui est susceptible de coopérer avec un premier contact fixe (44) relié au moteur d'entraînement (34) de l'antivol motorisé, en l'absence de clef (10), et avec un second contact fixe (46) relié à la centrale d'antivol (20), en présence d'une clef introduite (10), pour transmettre à la centrale d'antivol (20) un signal de demande de déverrouillage ou de verrouillage de l'antivol.

10. Antivol selon l'une quelconque des revendications précédentes, **caractérisé en ce que** le moteur d'entraînement (34) est relié électriquement à l'interrupteur de clef (14) et au contact fixe de déverrouillage (60) par un bloc d'alimentation (50) qui reçoit des signaux de commande de verrouillage ou de déverrouillage provenant de la centrale d'antivol (20).

## Claims

1. Electric anti-theft device (10), especially for a motor vehicle, of the type including:
- an anti-theft changeover switch (12) for the control of the starting (DEM) of the engine of the vehicle and of the power supply to various electrical circuits of the vehicle (ACC, ALL);
- a motorised anti-theft device including an electric motor (34) for driving a blocking member (36) between a locked position and an unlocked position; and
- an anti-theft central unit (20) connected to the foregoing elements in order to implement a method for control of the anti-theft device;
- and of the type in which the anti-theft changeover switch (12) includes:
- a key switch (14) for detecting the simulation of the insertion of a key (10) into the anti-theft changeover switch (12); and
- a multi-position control switch (16) for controlling the power supply, in sequence, to several electrical circuits of the vehicle (ACC, ALL) and to the starter (DEM), including a movable control contact (52) linked to one polarity (+BAT) of an electrical power-supply source, and a series of fixed contacts (54, 56, 58) with which the movable control contact (52) comes successively into contact when the changeover switch (12) is operated with a view to causing the starting of the vehicle, and among which the last fixed contact (58) is linked especially to the starter (DEM), the control switch being able to be actuated only when a key is present;
**characterised in that**:
- the starter fixed contact is linked to the starter by an inhibition device (80) which establishes the power supply to the starter (DEM) only when the anti-theft device is in unlocked position;
and **in that**:
- the drive motor (34) of the motorised anti-theft device is linked to the power-supply source (+BAT) by the key switch (14), when the key (10) is absent, and, when a key (10) is inserted, by a power-supply line (61) linked to a fixed unlocking contact (60) belonging to the control switch (16) and with which (60) the movable control contact interacts only simultaneously with the starter fixed contact (58).

2. Anti-theft device according to Claim 1, **characterised in that** it includes means (64) for detecting the locked or unlocked state of the anti-theft device, which deliver a corresponding signal to the anti-theft central unit (20).

3. Anti-theft device according to Claim 2, **characterised in that** the detection means (64) includes a detection switch with two positions, locked or unlocked, the movable contact (66) of which is driven by the drive motor (34), or the blocking member, and the fixed contacts (68, 70) of which are linked to the anti-theft central unit (20).

4. Anti-theft device according to Claim 3, **characterised in that** the inhibition device (80) is an inhibition switch the movable contact (82) of which is linked (83) to the starter fixed contact (58) and interacts with a fixed contact (84) linked to the starter (DEM) when the movable contact (66) of the detection switch (64) is in its unlocked position.

5. Anti-theft device according to Claim 4, **characterised in that** the movable contacts (66, 82) of the detection (64) and inhibition (80) switches are integral with one another.

6. Anti-theft device according to Claim 2, **characterised in that** the means (64) for detection of the locked or unlocked state of the anti-theft device include two sensors (68, 72) of the position of the drive motor (34), or of the blocking member, which are linked to the anti-theft central unit (20).

7. Anti-theft device according to Claim 6, **characterised in that** the inhibition device (80) is a transistor (90), the collector (92) of which is linked to the power-supply source (+BAT), the emitter (94) of which is linked to the starter (DEM), and the base (96) of which is linked to the anti-theft central unit (20), **in that** the starter fixed contact (58) is linked to the anti-theft central unit (20), and **in that** the transistor (90) is conducting only when the anti-theft central unit simultaneously receives an unlocking signal from the anti-theft device originating from the corresponding sensor (72) of the detection means (64) and a control signal for the starting originating from the starter fixed contact (58).

8. Anti-theft device according to any one of the preceding claims, **characterised in that** the anti-theft changeover switch (12) is a rotary changeover switch.

9. Anti-theft device according to any one of the preceding claims, **characterised in that** the key switch (14) includes a movable contact (42) linked to the power-supply source (BAT plus) and which is capable of interacting with a first fixed contact (44) linked to the drive motor (34) of the motorised anti-theft device, when the key (10) is absent, and with a second fixed contact (46) linked to the anti-theft central unit (20), when an inserted key (10) is present, in order to transmit to the anti-theft central unit (20) a signal requesting unlocking or locking of the anti-theft device.

10. Anti-theft device according to any one of the preceding claims, **characterised in that** the drive motor (34) is linked electrically to the key switch (14) and to the fixed unlocking contact (60) by a power-supply unit (50) which receives locking or unlocking control signals originating from the anti-theft central unit (20).

## Patentansprüche

1. Elektrische Diebstahlsicherung, insbesondere für ein Kraftfahrzeug, mit
- einem Diebstahlschutzschalter (12) zur Steuerung des Startvorganges (DEM) des Fahrzeugmotors und zur Versorgung der unterschiedlichen elektrischen Stromkreise des Fahrzeuges (ACC, ALL);
- einer motorbetätigten Diebstahlsicherung mit einem Elektromotor (34) für den Antrieb eines Sperrelementes (36) zwischen einer verriegelten Stellung und einer entriegelten Stellung; und
- einer mit den vorgenannten Elementen verbundenen Diebstahlschutzsteuerung (20) zur Anwendung eines Verfahrens zur Kontrolle der Diebstahlsicherung;
und wobei der Diebstahlschutzschalter (12) folgendes umfaßt:
- einen Schlüsselschalter (14) zum Erkennen der Simulation des Einführens eines Schlüssels (10) in den Diebstahlschutzschalter (12); und
- einen Mehrstellungssteuerschalter (16) für die sequentielle Steuerung der Versorgung mehrerer elektrischer Stromkreise (ACC, ALL) des Fahrzeuges und des Starters (DEM), wobei der Mehrstellungssteuerschalter einen beweglichen Steuerkontakt (52), der mit einer Polarität (+BAT) einer Stromquelle verbunden ist, und eine Reihe von feststehenden Kontakten (54, 56, 58) enthält, mit denen der bewegliche Kontakt (52) bei einer Betätigung des Schalters (12) nacheinander in Berührung kommt, um das Fahrzeug zu starten, und bei welchen der letzte feststehende Kontakt (58) insbesondere mit dem Starter (DEM) verbunden ist, und wobei der Steuerschalter (16) nur in Gegenwart eines Schlüssels (10) betätigt werden kann;
**dadurch gekennzeichnet,**
- **daß** der dem Starter zugeordnete feststehende Kontakt mit dem Starter über eine Sperrvorrichtung (80) verbunden ist, welche den Starter (DEM) nur mit Strom versorgt, wenn die Diebstahlsicherung sich in der entriegelten Stellung befindet; und
- **daß** der Antriebsmotor (34) der motorbetätigten Diebstahlsicherung bei Abwesenheit des Schlüssels mit der Stromquelle (+BAT) über den Schlüsselschalter (14) verbunden ist, und, sofern ein Schlüssel (10) eingeführt ist, über eine Stromleitung (61) mit einem feststehenden, dem Steuerschalter (16) zugeordneten Entriegelungskontakt (60) verbunden ist, und mit dem der bewegliche Steuerkontakt (52) nur simultan mit dem feststehenden Kontakt des Starters (58) zusammenwirkt.

2. Diebstahlsicherung nach Anspruch 1, **dadurch gekennzeichnet, daß** sie Mittel (64) zum Bestimmen des Ver- oder Entriegelungszustandes der Diebstahlsicherung umfaßt, die ein entsprechendes Signal an die Diebstahlschutzsteuerung (20) übermitteln.

3. Diebstahlsicherung nach Anspruch 2, **dadurch gekennzeichnet, daß** die Mittel (64) zur Bestimmung des Ver- oder Entriegelungszustandes einen Zustandsbestimmungsschalter mit zwei Stellungen, für die Ver- oder Entriegelung, umfassen, dessen beweglicher Kontakt (66) durch den Antriebsmotor (34) oder das Sperrelement betätigbar ist und dessen feststehenden Kontakte (68, 72) mit der Diebstahlschutzsteuerung (20) verbunden sind.

4. Diebstahlsicherung nach Anspruch 3, **dadurch gekennzeichnet, daß** es sich bei der Sperrvorrichtung (80) um einen Sperrschalter handelt, dessen beweglicher Kontakt (82) mit dem feststehenden, dem Starter zugeordneten Kontakt (58) verbunden ist, und der mit einem feststehenden, mit dem Starter (DEM) verbundenen Kontakt (84) zusammenwirkt, wenn der bewegliche Kontakt (66) des Zustandsbestimmungsschalters (64) sich in seiner Entriegelungsstellung befindet.

5. Diebstahlsicherung nach Anspruch 4, **dadurch gekennzeichnet, daß** die beweglichen Kontakte (66, 82) des Zustandsbestimmungsschalters (64) und des Sperrschalters (80) beide einstückig miteinander verbunden sind.

6. Diebstahlsicherung nach Anspruch 2, **dadurch gekennzeichnet, daß** die Mittel (64) zur Bestimmung des Ver- oder Entriegelungszustandes der Diebstahlsicherung zwei mit der Diebstahlschutzsteuerung (20) verbundene Meßwertaufnehmer (68, 72) zur Ermittlung der Position des Antriebsmotors (34) oder des Sperrelementes umfassen.

7. Diebstahlsicherung nach Anspruch 6, **dadurch gekennzeichnet, daß** es sich bei der Sperrvorrichtung (80) um einen Transistor (90) handelt, dessen Kollektor (92) mit der Stromquelle (+BAT), dessen Emitter (94) mit dem Starter (DEM) und dessen Basis (96) mit der Diebstahlschutzsteuerung (20) verbunden sind, daß der feststehende, dem Starter zugeordnete Kontakt (58) mit der Diebstahlschutzsteuerung (20) verbunden ist und daß der Transistor (90) nur dann leitend ist, wenn die Diebstahlschutzsteuerung gleichzeitig ein Entriegelungssignal der Diebstahlsicherung von dem entsprechenden Meßwertaufnehmer (72) der Zustandsbestimmungsmittel (64) und ein Signal zum Starten von dem feststehenden dem Starter zugeordneten Kontakt (58) empfängt.

8. Diebstahlsicherung nach einem der vorhergehenden Ansprüche, **dadurch gekennzeichnet, daß** es sich bei dem Diebstahlschutzschalter (12) um einen Drehschalter handelt.

9. Diebstahlsicherung nach einem der vorhergehenden Ansprüche, **dadurch gekennzeichnet, daß** der Schlüsselschalter (14) einen beweglichen Kontakt (42) umfaßt, der mit der Stromquelle (+BAT) verbunden ist, und der mit einem ersten feststehenden Kontakt (44) zusammenwirkt, welcher mit dem Antriebsmotor (34) der motorbetätigten Diebstahlsicherung in Abwesenheit des Schlüssels (10) verbunden ist, und der mit einem zweiten feststehenden Kontakt (46) zusammenwirkt, welcher bei einem vorhandenen eingeführten Schlüssel (10) mit der Diebstahlschutzsteuerung (20) verbunden ist, um der Diebstahlschutzsteuerung (20) ein Abfragesignal hinsichtlich der Entriegelung oder Verriegelung zu übermitteln.

10. Diebstahlsicherung nach einem der vorhergehenden Ansprüche, **dadurch gekennzeichnet, daß** der Antriebsmotor (34) über eine Stromversorgungseinheit (50), welche Steuersignale zur Verriegelung oder Entriegelung von der Diebstahlschutzsteuerung (20) erhält, elektrisch mit dem Schlüsselschalter (14) und mit dem feststehenden Entriegelungskontakt (60) verbunden ist.
